# FASCICULE DE BREVET EUROPEEN

(11) **EP 3 326 271 B1**
(45) Date de publication et mention de la délivrance du brevet: **26.10.2022**
(21) Numéro de dépôt: 16739515.1
(22) Date de dépôt: 19.07.2016
(51) Int. Cl.: H02K 9/06

(54) **MACHINE ELECTRIQUE TOURNANTE A REFROIDISSEMENT AMELIORE**
ELEKTRISCHE DREHMASCHINE MIT VERBESSERTER KÜHLUNG
ELECTRICAL ROTATING MACHINE WITH IMPROVED COOLING

(30) Priorité: 24.07.2015 FR 1557105
(43) Date de publication de la demande: 30.05.2018
(73) Titulaire: Moteurs Leroy-Somer, 16915 Angouleme Cedex 9 (FR)
(72) Inventeur: ZAHRADSKY, Vit, 78833 Hanusovice (CZ); BOIRLAUD, Matthieu, 16710 Saint-Yrieix (FR)
(74) Mandataire: Nony
(86) Numéro de dépôt international: PCT/EP2016/067176
(87) Numéro de publication internationale: WO 2017/016932

(56) Documents cités:
- WO-A1-2005/062444
- WO-A2-2010/018334
- WO-A2-2013/136021
- BE-A- 652 164
- DE-A1- 1 538 817
- DE-U1- 8 212 393
- DE-U1- 8 212 393
- DE-U1- 20 218 343
- FR-A1- 2 855 673
- FR-A7- 2 103 261
- FR-E- 10 879
- GB-A- 634 186
- JP-A- 2001 037 134
- JP-U- S57 111 068
- JP-Y1- S5 538 232
- JP-Y1- S5 538 232
- US-A- 2 494 200
- US-A- 4 270 064
- US-A1- 2008 150 400
- US-A1- 2008 150 400

## Description

La présente invention concerne les machines électriques tournantes.

L'invention s'intéresse plus particulièrement, mais non exclusivement, au refroidissement des machines électriques tournantes ouvertes, monophasées ou polyphasées.

On désigne par "machine électrique tournante ouverte" une machine refroidie par une circulation d'air prélevé à l'extérieur de la machine.

L'invention concerne plus particulièrement le refroidissement des machines dont le rotor comporte des enroulements avec des têtes de bobines et des parties d'enroulement parallèles à l'axe de rotation de la machine, encore appelées "parties droites", maintenues par des cales de serrage.

Il a déjà été proposé divers perfectionnements pour accroître l'efficacité du refroidissement de telles machines, notamment dans la demande FR2940867.

Le modèle d'utilité DE G 8212393 divulgue un rotor bobiné comportant des ailettes de largeur constante, fixées sur les pôles par une pièce rapportée.

WO 2005/062444 divulgue un ralentisseur comportant un stator et un rotor alimenté par une génératrice comportant un stator inducteur entourant un rotor induit. Le ralentisseur est refroidi par un système de ventilation comportant des pales et des ouïes.

FR10879 divulgue un moteur comportant des ailettes fixées à un rotor bobiné.

US2008150400 divulgue une machine électrique comportant un rotor à cage et des pales de ventilation disposées sur un anneau d'extrémité du rotor.

JPS57111068 divulgue un rotor comportant des pôles bobinés et un ventilateur fixé au rotor via des pattes de fixation.

FR2103261 divulgue un rotor bobiné comportant des ailettes de ventilation supplémentaires fixés sur des cales des encoches du rotor ou sur un anneau fixé dans les encoches du rotor.

JPS5538232 divulgue un rotor avec des pôles bobinés et un ventilateur fixé directement sur les pôles.

WO2010018334 divulgue une machine avec des pôles comportant des épanouissements polaires et à doubles ventilateurs.

JP2001037134 divulgue un moteur comportant des pales (3) de ventilation moulées intégralement avec le rotor.

US 2494200 divulgue une machine comportant un ventilateur principal et un ventilateur auxiliaire comportant des ailettes portées par le rotor et en retrait des bobines du stator.

WO2013/136021 divulgue une machine électrique tournante comportant des brides de support comportant des pales de ventilation axiales et des orifices. Des pales de ventilations axiales peuvent être associées à ces orifices.

BE 652 164 divulgue une machine électrique tournante comportant un ventilateur 22 et des pales de ventilation aux extrémités du rotor 10, 15.

L'invention vise à perfectionner encore les machines électriques tournantes et elle y parvient grâce à une machine électrique tournante selon la revendication 1, comportant un rotor et un stator, étant refroidie par un flux d'air crée par l'intermédiaire d'au moins un ventilateur, qui peut être entrainé par l'arbre principal de la machine ou par son propre système d'entrainement, et comportant des pôles formés de paquets de tôles magnétiques et des conducteurs électriques bobinés autour de chaque pôle, le rotor comportant des ailettes de refroidissement qui s'étendent dans le prolongement des pôles selon l'axe de rotation du rotor.

L'invention permet d'utiliser la rotation du rotor pour refroidir le stator, les ailettes de refroidissement générant un flux d'air qui est projeté, principalement, dans la direction radiale vers les enroulements du stator.

L'invention permet d'accroître l'efficacité du refroidissement du stator.

Chaque ailette est fixée sur des têtes de bobines enroulées sur ces pôles.

Par « têtes de bobines » il faut comprendre les parties des enroulements du rotor qui s'étendent hors du circuit magnétique du rotor, notamment les parties des enroulements qui vont d'une fenêtre de bobinage à une autre.

Les ailettes sont maintenues chacune à l'aide d'un outil utilisé lors du bobinage du rotor.

Les têtes de bobines du rotor présentent des conducteurs électriques espacés, définissant entre eux des passages contribuant à l'aération des têtes de bobines. L'outil servant à maintenir les conducteurs espacés sert à la fixation des ailettes sur le rotor.

La machine électrique tournante peut comporter un stator, et un rotor tel que défini précédemment. Le stator peut présenter des têtes de bobines et les ailettes de refroidissement s'étendent de préférence axialement en retrait des têtes de bobine du stator.

Les ailettes présentent, de préférence, une dimension radiale qui croît en s'éloignant du pôle correspondant. Les ailettes peuvent présenter un bord radialement intérieur parallèle à l'axe de rotation et un bord radialement extérieur s'étendant radialement vers l'extérieur, en éloignement du pôle correspondant. La distance entre le bord radialement extérieur et la surface enveloppe des têtes de bobines du stator en regard, peut être variable ou sensiblement constante.

Il est avantageux que la largeur des ailettes soit variable car cela permet de rapprocher au mieux l'un de leurs bords de la tête de bobine stator et ainsi de refroidir plus efficacement ces dernières.

Les ailettes sont fixées sur le bobinage rotor. Cela permet une économie de matière.

Il est avantageux que le diamètre le plus extérieur des ailettes constitue le plus grand diamètre extérieur du rotor. Cela peut améliorer l'efficacité de refroidissement du stator.

Les ailettes peuvent être planes ou non planes.

La machine peut comporter un ventilateur radial. Ce ventilateur peut aussi être hélico-centrifuge ou axial.

La machine est de préférence un alternateur.

Les ailettes peuvent être positionnées d'un seul côté ou de chaque côté de la masse polaire principale, ce qui peut améliorer l'efficacité du fonctionnement de la machine.

L'invention pourra être mieux comprise à la lecture de la description détaillée qui va suivre, d'exemples de mise en œuvre non limitatifs de celle-ci, et à l'examen du dessin annexé, sur lequel :
- la figure 1 représente de façon schématique et en perspective, avec coupe longitudinale partielle, un exemple de machine tournante selon l'invention,
- la figure 2 représente isolément une ailette de refroidissement,
- la figure 3 est une vue en perspective représentant un détail de réalisation du rotor, et
- la figure 4 illustre une variante de réalisation non couverte par l'invention.

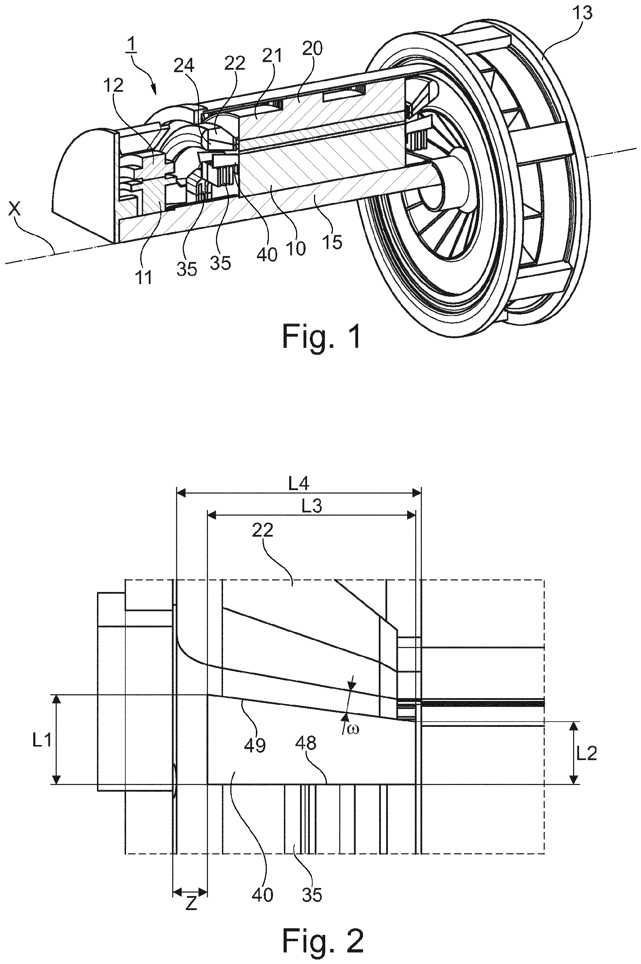

La machine électrique tournante 1 selon l'invention, représentée partiellement à la figure 1, est un alternateur.

La machine comporte une masse polaire principale 10, tournant avec le rotor, un stator principal 20, et une excitatrice comportant un induit d'excitatrice 11 et un inducteur d'excitatrice 12, de façon conventionnelle.

Le rotor tourne selon un axe de rotation X avec un arbre 15 qui entraîne un ventilateur 13, encore appelé turbine, qui génère un flux d'air de refroidissement axial à travers la machine. Le ventilateur 13 est de préférence un ventilateur à double voile, par exemple un ventilateur centrifuge ou hélico-centrifuge, disposé par exemple sur le rotor à l'opposé de l'excitatrice 11, comme illustré.

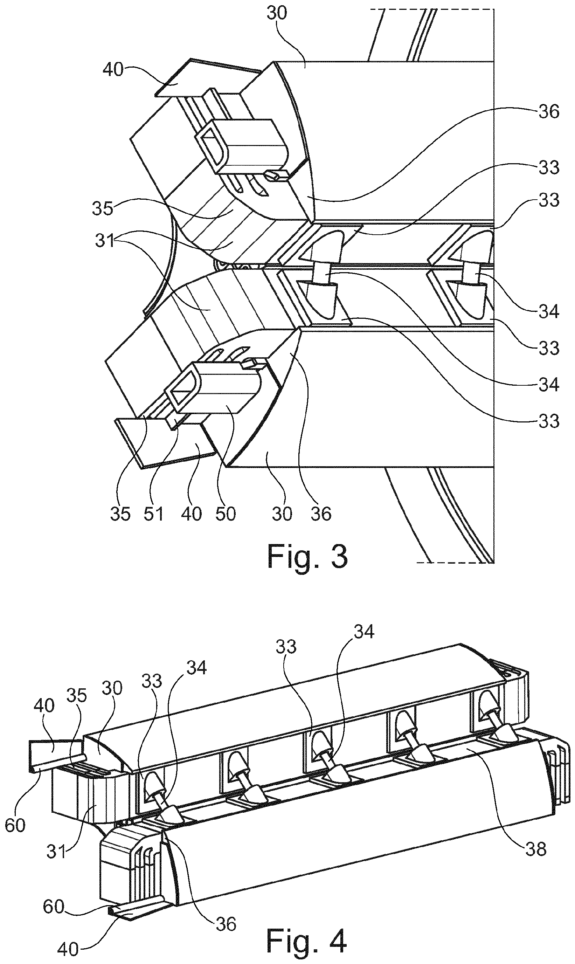

Si l'on se reporte aux figures 3 et 4, on voit que le rotor comporte des pôles 30 formés par des paquets de tôles magnétiques, sur lesquels sont bobinés des conducteurs 31. Ces derniers sont agencés sous la forme de bobines qui présentent des parties droites qui s'étendent le long de l'axe de rotation X, maintenues plaquées contre le paquet de tôles du pôle correspondant par des cales 33 et des vis de serrage 34, et des têtes de bobines 35 qui dépassent axialement du paquet de tôles correspondant.

Les pôles 30 peuvent être réalisés avec des épanouissements polaires 36 qui aident à retenir les bobines 31 sur le rotor, contre l'action de la force centrifuge.

Les canaux interpolaires 38 peuvent recevoir tout dispositif de refroidissement additionnel, comme décrit dans la demande FR2940867.

Le stator 20 comporte un paquet de tôles 21 sur lequel sont bobinés des enroulements 22.

L'invention s'applique à différents types de stators. Il est toutefois à noter que l'invention présente de meilleures performances et un plus grand intérêt avec les stators à bobinage distribué (en anglais "random wound stators"). L'invention couvre aussi les machines à bobinage stator dits « form wounded ».

L'enroulement 22 du stator forme des têtes de bobine 24 qui se superposent au moins partiellement, axialement, avec celles du rotor, comme on peut le voir notamment à la figure 1.

Conformément à l'invention, on munit le rotor d'ailettes de refroidissement 40 qui sont destinées à projeter un flux d'air de refroidissement additionnel sur le stator. Ces ailettes de refroidissement 40 sont par exemple, comme illustré, au nombre de quatre, à savoir une par pôle à chaque extrémité de l'inducteur principal du rotor, dans l'exemple considéré.

Les ailettes 40 s'étendent dans le prolongement du paquet de tôles du rotor, au niveau de chaque pôle.

Les ailettes 40 peuvent s'étendre dans la direction radiale au-delà du cylindre enveloppe défini par les pôles du rotor, en profitant du fait qu'elles se situent hors de l'entrefer dans une zone où elles n'ont en regard d'elles que les têtes de bobines 22 du stator et non le circuit magnétique de celui-ci, défini par le paquet de tôles du stator.

On peut donner aux ailettes 40 diverses formes et par exemple, comme illustré à la figure 2, une forme où leur dimension radiale croît depuis une valeur L2 au niveau de leur base, là où elles se raccordent au paquet de tôles du pôle correspondant, à une valeur L1 au niveau de leur bord distal, lorsque l'on progresse selon l'axe de rotation du rotor.

La longueur L3 d'une ailette 40 peut être telle que celle-ci s'étende axialement au-delà de la tête de bobine 35 adjacente. Chaque ailette 40 s'étend de préférence en retrait axialement de la tête de bobine 22 du stator, comme on peut le voir à la figure 2.

Les ailettes 40 peuvent présenter un bord radialement intérieur 48 parallèle à l'axe de rotation X et un bord radialement extérieur 49 s'étendant radialement vers l'extérieur en éloignement du paquet de tôles du pôle correspondant.

La distance *w* entre le bord radialement extérieur 49 et la surface enveloppe des têtes de bobines 22 du stator en regard peut être sensiblement constante, comme illustré sur la figure 2. Il peut en être autrement. En effet les ailettes 40 peuvent avoir une forme telle que la distance *w* est non constante entre le bord radialement extérieur 49 et la surface enveloppe des têtes de bobines 22 du stator en regard.

Dans l'exemple illustré, le rotor comporte 4 pôles avec une ailette 40 par pôle et 4 ailettes de refroidissement de chaque côté de l'inducteur principal, soit 8 ailettes de refroidissement en tout. Toutefois, l'invention n'est pas limitée à un nombre particulier d'ailettes de refroidissement, et celui-ci est par exemple compris entre 1 et 200 par pôle, d'un côté au moins du rotor.

On profite de la présence d'un outil, ou pièce permettant le bobinage, utilisé pour bobiner les conducteurs d'un pôle du rotor pour maintenir une ailette de refroidissement 40 en place sur le rotor, comme illustré à la figure 3. Cet outil sert à maintenir écartés les enroulements du rotor au niveau des têtes de bobines 35, afin de leur conférer un caractère aéré et faciliter leur refroidissement.

Sur la figure 3, on voit une pièce de fixation 50 qui est accrochée sur une tête de bobine 35 correspondante et qui maintient, grâce à un bras 51, l'ailette 40. La pièce de fixation 50 est fixée, par exemple, au rotor 10 par le biais des épanouissements polaires 36, ou par des consoles des têtes de bobine, et/ou du bobinage de l'inducteur principal 10 qui permet de coincer la pièce de fixation 50 et la maintenir dans la machine lorsque le rotor 10 est en rotation.

Dans une variante non couverte par l'invention, illustrée à la figure 4, les ailettes 40 sont maintenues par des tiges de support 60 qui sont fixées chacune dans le paquet de tôles des pôles correspondants. Par exemple, chaque tige 60 s'étend dans un perçage réalisé dans le paquet de tôles.

Selon des variantes non couvertes par l'invention, les ailettes 40 peuvent être fixées encore autrement sur le rotor, étant par exemple collées sur le rotor, par exemple sur les têtes de bobines et/ou sur le paquet de tôles et/ou vissées sur les tôles de garde ou tôles principales. Lorsque les ailettes sont fixées sur le paquet de tôles, elles peuvent être soudées ou encliquetées sur celui-ci.

Selon des variantes non couvertes par l'invention, les ailettes de refroidissement 40 peuvent encore être réalisées directement avec une partie d'extrémité du rotor, servant par exemple à maintenir en compression le paquet de tôles.

Au cours du fonctionnement de la machine, les ailettes 40 agissent en quelque sorte à la manière d'un ventilateur radial. De l'air est aspiré par la dépression, du fait de la rotation des ailettes, et celles-ci génèrent un flux d'air dans la direction radiale vers les têtes de bobines du stator. Ce flux d'air généré par les ailettes de refroidissement 40 en raison de la rotation du rotor permet d'obtenir un coefficient de transfert thermique plus important au niveau du bobinage du stator, ce qui peut entraîner une diminution des points chauds susceptibles d'apparaître notamment au niveau des têtes de bobines de celui-ci. Il en résulte une température moyenne plus basse des enroulements statoriques.

Les ailettes de refroidissement peuvent également jouer un rôle, plus faible mais non négligeable, sur le refroidissement du rotor. En effet, l'aspiration créée au niveau des ailettes de refroidissement 40 peut permettre, dans certains cas, d'améliorer l'écoulement d'air au niveau des aérations radiales de la masse polaire principale 10.

L'invention n'est pas limitée aux exemples qui viennent d'être décrits.

On peut modifier encore la forme et/ou le nombre des ailettes. Chaque ailette de refroidissement peut géométriquement être contenue dans un seul plan comme illustré à la figure 2, mais cela n'est pas nécessaire. On peut avoir des formes inclinées continues ou discontinues par morceaux ou bien encore toute combinaison d'ailettes de refroidissement de différentes formes chacune.

## Revendications

1. Machine électrique tournante comportant un stator (20), un rotor et au moins un ventilateur (13), la machine étant refroidie par un flux d'air crée par l'intermédiaire du ventilateur, le rotor comportant des pôles (30) formés de paquets de tôles magnétiques (10), et des conducteurs électriques (31) bobinés autour de chaque pôle et formant des têtes de bobines (35), le rotor comportant des ailettes de refroidissement (40) qui s'étendent dans le prolongement des pôles selon l'axe de rotation (X) du rotor, machine **caractérisée en ce que** les ailettes (40) sont maintenues chacune au rotor à l'aide d'un outil utilisé lors du bobinage du rotor, l'outil maintenant les conducteurs électriques espacés au niveau des têtes de bobines du rotor, définissant entre eux des passages contribuant à l'aération des têtes de bobines, l'outil comportant une pièce de fixation (50) qui est accrochée sur une tête de bobine (35) correspondante et un bras (51) qui maintient l'ailette (40) correspondante.

2. Machine électrique tournante selon la revendication précédente, le ventilateur étant à double voile.

3. Machine électrique tournante selon la revendication précédente, le ventilateur étant un centrifuge ou hélico-centrifuge.

4. Machine électrique tournante selon l'une quelconque des revendications précédentes, la machine étant un alternateur et comportant une excitatrice (11), le ventilateur étant disposé sur le rotor à l'opposé de l'excitatrice (11).

5. Machine selon la revendication 4, comportant des ailettes (40) d'un seul côté ou de chaque côté du rotor.

6. Machine électrique tournante selon l'une quelconque des revendications précédentes, les pôles (30) étant réalisés avec des épanouissements polaires (36) et la pièce de fixation (50) étant fixée au rotor (10) par le biais des épanouissements polaires (36).

7. Machine électrique tournante selon l'une quelconque des revendications précédentes, le stator présentant des têtes de bobines, les ailettes de refroidissement (40) s'étendant axialement en retrait des têtes de bobines du stator (20).

8. Machine électrique tournante selon l'une quelconque des revendications précédentes, un diamètre le plus extérieur des ailettes définissant un plus grand diamètre extérieur pour le rotor.

9. Machine selon l'une quelconque des revendications précédentes, les ailettes (40) présentant chacune une dimension radiale qui croît en éloignement du pôle correspondant.

10. Machine selon l'une quelconque des revendications 1 à 8, les ailettes (40) présentant chacune une dimension radiale qui décroît en éloignement du pôle correspondant.

11. Machine selon la revendication 9, les ailettes (40) présentant un bord radialement intérieur (48) parallèle à l'axe de rotation (X) et un bord radialement extérieur (49) s'étendant radialement vers l'extérieur, en éloignement du pôle correspondant.

12. Machine selon la revendication 10, les ailettes (40) présentant un bord radialement intérieur (48) parallèle à l'axe de rotation (X) et un bord radialement extérieur (49) s'étendant radialement vers l'extérieur, en se rapprochant du pôle correspondant.

13. Machine selon la revendication 11, une distance w entre le bord radialement extérieur (49) des ailettes (40) et des têtes de bobine du stator en regard étant sensiblement constante.

14. Machine selon l'une quelconque des revendications 1 à 13, les ailettes (40) possédant une forme plane.

## Patentansprüche

1. Drehende elektrische Maschine aufweisend einen Stator (20), einen Rotor und wenigstens einen Ventilator (13), wobei die Maschine von einem Luftstrom gekühlt wird, der mittels des Ventilators erzeugt wird, wobei der Rotor Pole (30), die von Paketen aus Magnetblechen (10) gebildet sind, und elektrische Leiter (31) aufweist, die um jeden Pol gewickelt sind und Spulenköpfe (35) bilden, wobei der Rotor Kühlrippen (40) aufweist, die sich in der Verlängerung der Pole entlang der Drehachse (X) des Rotors erstrecken, wobei die Maschine **dadurch gekennzeichnet ist, dass** die Rippen (40) jeweils mithilfe eines Werkzeugs am Rotor gehalten werden, das beim Wickeln des Rotors verwendet wird, wobei das Werkzeug die elektrischen Leiter an den Spulenköpfen des Rotors beabstandet hält, zwischen ihnen Durchgänge definiert, die zur Belüftung der Spulenköpfe beitragen, wobei das Werkzeug ein Befestigungsteil (50), das an einem entsprechenden Spulenkopf (35) angebracht ist, und einen Arm (51) aufweist, der die entsprechende Rippe (40) hält.

2. Drehende elektrische Maschine nach dem vorhergehenden Anspruch, wobei der Ventilator eine Doppelscheibe aufweist.

3. Drehende elektrische Maschine nach dem vorhergehenden Anspruch, wobei der Ventilator ein Zentrifugal- oder Rohrventilator ist.

4. Drehende elektrische Maschine nach einem der vorhergehenden Ansprüche, wobei die Maschine ein Generator ist und eine Erregereinrichtung (11) aufweist, wobei der Ventilator auf dem Rotor der Erregereinrichtung (11) entgegengesetzt angeordnet ist.

5. Maschine nach Anspruch 4, aufweisend Rippen (40) nur auf einer Seite oder auf jeder Seite des Rotors.

6. Drehende elektrische Maschine nach einem der vorhergehenden Ansprüche, wobei die Pole (30) mit Polschuhen (36) ausgebildet sind und das Befestigungsteil (50) über die Polschuhe (36) am Rotor (10) befestigt ist.

7. Drehende elektrische Maschine nach einem der vorhergehenden Ansprüche, wobei der Stator Spulenköpfe aufweist, wobei sich die Kühlrippen (40) axial von den Spulenköpfen des Stators (20) zurückgesetzt erstrecken.

8. Drehende elektrische Maschine nach einem der vorhergehenden Ansprüche, wobei ein äußerster Durchmesser der Rippen einen größten Außendurchmesser für den Rotor definiert.

9. Maschine nach einem der vorhergehenden Ansprüche, wobei die Rippen (40) jeweils eine Radialabmessung aufweisen, die mit zunehmender Entfernung vom entsprechenden Pol zunimmt.

10. Maschine nach einem der Ansprüche 1 bis 8, wobei die Rippen (40) jeweils eine Radialabmessung aufweisen, die mit zunehmender Entfernung vom entsprechenden Pol abnimmt.

11. Maschine nach Anspruch 9, wobei die Rippen (40) einen radial inneren Rand (48) parallel zur Drehachse (X) und einen radial äußeren Rand (49), der sich radial nach außen erstreckt, aufweisen, mit zunehmender Entfernung vom entsprechenden Pol.

12. Maschine nach Anspruch 10, wobei die Rippen (40) einen radial inneren Rand (48) parallel zur Drehachse (X) und einen radial äußeren Rand (49), der sich radial nach außen erstreckt, aufweisen, mit zunehmender Nähe zum entsprechenden Pol.

13. Maschine nach Anspruch 11, wobei ein Abstand *w* zwischen dem radial äußeren Rand (49) der Rippen (40) und Spulenköpfen des Stators gegenüber im Wesentlichen konstant ist.

14. Maschine nach einem der Ansprüche 1 bis 13, wobei die Rippen (40) eine ebene Form aufweisen.

## Claims

1. Rotary electric machine comprising a stator (20), a rotor and at least one fan (13), the machine being cooled by an air flow created by means of the fan, the rotor having poles (30) formed of bundles of magnetic laminations (10), and electrical conductors (31) wound around each pole and forming winding overhangs (35), the rotor comprising cooling fins (40) which extend in the continuation of the poles along the axis of rotation (X) of the rotor, the machine being **characterized in that** the fins (40) are each held on the rotor by means of a tool used during the winding of the rotor, the tool keeping the electrical conductors spaced apart at the winding overhangs of the rotor, defining between them passages that contribute to the ventilation of the winding overhangs, the tool comprising a fixing piece (50) which is attached to a corresponding winding overhang (35) and an arm (51) which holds the corresponding fin (40).

2. Rotary electric machine according to the preceding claim, the fan being a fan with two end plates.

3. Rotary electric machine according to the preceding claim, the fan being a centrifugal fan or a centrifugal propeller fan.

4. Rotary electric machine according to any one of the preceding claims, the machine being an alternator and comprising an exciter (11), the fan being placed on the rotor at the opposite end from the exciter (11).

5. Machine according to Claim 4, comprising fins (40) on just one side or one each side of the rotor.

6. Rotary electric machine according to any one of the preceding claims, the poles (30) being produced with pole shoes (36) and the fixing piece (50) being fixed to the rotor (10) by means of the pole shoes (36).

7. Rotary electric machine according to any one of the preceding claims, the stator having winding overhangs, the cooling fins (40) extending axially set back from the winding overhangs of the stator (20).

8. Rotary electric machine according to any one of the preceding claims, an outermost diameter of the fins defining the largest outside diameter of the rotor.

9. Machine according to any one of the preceding claims, the fins (40) each having a radial dimension that increases with increasing distance away from the corresponding pole.

10. Machine according to any one of Claims 1 to 8, the fins (40) each having a radial dimension that decreases with increasing distance away from the corresponding pole.

11. Machine according to Claim 9, the fins (40) having a radially inner edge (48) parallel to the axis of rotation (X) and a radially outer edge (49) extending radially outwards away from the corresponding pole.

12. Machine according to Claim 10, the fins (40) having a radially inner edge (48) parallel to the axis of rotation (X) and a radially outer edge (49) extending radially outwards towards the corresponding pole.

13. Machine according to Claim 11, a distance w between the radially outer edge (49) of the fins (40) and the stator winding overhangs facing it being substantially constant.

14. Machine according to any one of Claims 1 to 13, the fins (40) having a flat shape.
